**Europäisches Patentamt**

**European Patent Office**

**Office européen des brevets**

(11) Veröffentlichungsnummer: **0 249 072**
**B1**

## EUROPÄISCHE PATENTSCHRIFT

(45) Veröffentlichungstag der Patentschrift:
**11.10.89**

(51) Int. Cl.⁴: **F16C 17/04**

(21) Anmeldenummer: **87107403.5**

(22) Anmeldetag: **21.05.87**

(54) **Axialdruck-bzw. -traglager, insbesondere für langsam drehende Maschinen.**

(30) Priorität: **12.06.86  DE 3619828**

(43) Veröffentlichungstag der Anmeldung:
**16.12.87 Patentblatt 87/51**

(45) Bekanntmachung des Hinweises auf die Patenterteilung:
**11.10.89 Patentblatt 89/41**

(84) Benannte Vertragsstaaten:
**DE ES GB NL**

(56) Entgegenhaltungen:
**DE-C- 487 677**
**DE-C- 971 722**
**FR-A- 518 923**
**GB-A- 297 875**
**GB-A- 1 068 448**
**US-A- 4 620 803**

**PATENT ABSTRACTS OF JAPAN, Band 10,**
**Nr. 193 (M-496)[2249], 8. Juli 1986; &**
**JP-A-61 38 213 (HITACHI LTD) 24-02-1986**

(73) Patentinhaber: **Apparatebau Rothemühle Brandt &**
**Kritzler Gesellschaft mit beschränkter Haftung,**
**Wildenburger Strasse 1, D-5963 Wenden 5 -**
**Rothemühle(DE)**

(72) Erfinder: **Schlüter, Siegfried, Dipl.-Ing., Heerweg 9,**
**D-5963 Wenden 5(DE)**

(74) Vertreter: **Müller, Gerd et al, Patentanwälte**
**HEMMERICH-MÜLLER-GROSSE-POLLMEIER-MEY**
**Hammerstrasse 2, D-5900 Siegen 1(DE)**

ACTORUM AG

**Beschreibung**

Die Erfindung betrifft ein Axialdruck-Gleitlager bzw. Axialtrag-Gleitlager, insbesondere für langsam drehende Maschinen, vornehmlich für die Drehhauben oder die drehbaren Speichermassen von Regenerativ-Wärmeaustauschern, bei welchem ein Grundkörper, z.B. ein Ring oder ein Ringsektor, in Umlaufrichtung sowie Radialrichtung gleichmäßig verteilt angeordnete Gleitschuhe trägt, auf denen sich eine ebene Gegenlagerfläche abstützt, wobei einander benachbarte Gleitschuhe jeweils durch Rinnen- oder Nutprofile gegeneinander abgegrenzt sind, die einen spiralförmig gekrümmten Verlauf haben.

Ein Axialdruck-Gleitlager bzw. Axialtrag-Gleitlager dieser Art ist bereits bekannt durch GB-A 1 068 448. Es ist dabei jedoch bezüglich seiner Drehzahl bzw. der gegebenen Relativgeschwindigkeiten zwischen seinen Lagerflächen für den Aufbau eines stabilen hydrodynamischen Schmierfilms ausgelegt.

Dieses bekannte Axialdruck-Gleitlager bzw. Axialtrag-Gleitlager hat jedoch den Nachteil, daß es für die Benutzung bei langsam drehenden Maschinen, bei welchen sich die aufeinandergleitenden Lagerflächen mangels Aufbaues eines ausreichenden Schmierfilms im Bereich der sogenannten Mischreibung befinden und damit einem erhöhten Abrieb unterliegen, nicht geeignet ist.

Nach GB-A 1 068 448 sind die Gleitschuhe in zwei ringförmig ineinanderliegenden, völlig verschiedenen Flächenbereichen mit zueinander gegensinniger Krümmungsrichtung sowie in Form von sich nach außen keilförmig verbreiternden Streifen vorgesehen.

Diese bekannte Bauart von Axialdruck-Gleitlagern bzw. Axialtrag-Gleitlagern läßt bei langsam drehenden Maschinen keine ausreichende Schmierstoffversorgung der zusammenwirkenden Gleitflächen zu und hat darüber hinaus den Nachteil daß, insbesondere bei auftretender Mischreibung, sich bildender Abrieb über einen relativ langen Drehwinkelbereich zwischen den aufeinandergleitenden Lagerflächen verbleibt und diese damit beschädigt.

Der Erfindung liegt die Aufgabe zugrunde, ein Axialdruck-Gleitlager bzw. Axialtrag-Gleitlager der eingangs angegebenen Bauart zu schaffen, bei welchem ein günstiges Verhältnis der durch die Gleitschuhe gebildeten tragenden Laufflächen zu den ihnen benachbarten Zwischenräumen erzielt wird, ohne daß sich hierdurch eine Beeinträchtigung der Laufeigenschaften, insbesondere im Bereich der sogenannten Mischreibung einstellt. Dabei kommt es besonders darauf an, auch im Extremfall, also bei Schmierstoffmangel, gute Notlaufeigenschaften unter Aufrechterhaltung eines leichtgängigen und langlebigen Lagerbetriebs zu erreichen.

Gelöst wird diese Aufgabe durch die Erfindung mit den Kennzeichnungsmerkmalen des Anspruchs 1, nämlich dadurch, daß die Gleitschuhe eine einem Viereck wenigstens angenäherte, rautenförmige Grundrißform haben und jeweils auf einer Vielzahl von sich in Umlaufrichtung um das Zentrum des Grundkörpers erstreckenden Kreislinien gleichmäßig verteilt angeordnet und zueinander kongruent ausgebildet sind, daß die Kantenlänge der auf verschiedenen Kreislinien liegenden Gleitschuhe proportional den unterschiedlichen Durchmessern dieser Kreislinien zunimmt, und daß zwei sich gegenseitig schneidende Gruppen von Rinnen- oder Nutprofilen die Gleitschuhe gegeneinander abgrenzen und dabei mit zueinander gegensinniger Krümmungsrichtung vorgesehen sind.

Diese erfindungsgemäße Ausgestaltung eines Axialdruck-Gleitlagers bzw. Axialtrag-Gleitlagers hat den besonderen Vorteil, daß das Verhältnis der tragenden Laufflächen an den Gleitschuhen zu den ihnen jeweils benachbarten Zwischenräumen im Bereich zwischen 75:25 und 90:10 liegen kann. Daraus ergibt sich wiederum, daß Axialdruck-Gleitlager bzw. Axialtrag-Gleitlager mit wünschenswert großem Laufflächenanteil der Gleitschuhe bei relativ geringem Gesamtdurchmesser erhalten werden können. Die Laufflächen des Lagers werden durch eine Vielzahl von größenmäßig unterschiedlichen, jedoch zueinander kongruenten Gleitschuh-Einzelelementen mit hohem Traganteil gebildet, wobei die Lauffläche derselben bezogen auf die Laufrichtung bzw. Rotationsrichtung des Gleitlagers – eine pflugartige Anordnung haben, bei der also die Begrenzungslinien der Gleitschuhe bzw. die diese bestimmenden Rinnen- oder Nutprofile an allen Stellen unter einem bestimmten Winkel zur Umlaufrichtung liegen. Hierdurch wird sichergestellt, daß einerseits jeder Gleitschuh möglichst günstig mit Schmierstoff versorgt ist, während er andererseits sofort von eventuell auftretendem Abrieb befreit wird.

Bevorzugt gelangt erfindungsgemäß eine Ausbildung der Axialdruck-Gleitlager bzw. Axialtrag-Gleitlager zum Einsatz, bei welcher die Rinnen- oder Nutprofile beider Gruppen gemäß Anspruch 2 die Form einer logarythmischen Spirale aufweisen.

In diesem Falle stellt sich eine ganze Reihe von Vorteilen ein.

– Die Anzahl der Gleitschuhe je Teilkreis ist konstant.
– Die Diagonalen der verschiedenen Gleitschuhe liegen auf den einzelnen Teilkreisen bzw. Radien.
– Die Begrenzungslinien der Gleitschuhe bzw. die Rinnen- oder Nutprofile verlaufen an allen Stellen unter einem Winkel von 45° zu den jeweiligen Teilkreisen bzw. Radien und haben an den betreffenden Stellen einen dem jeweiligen Radius entsprechenden Krümmungsradius.
– Die Begrenzungslinien der Gleitschuhe bzw. der Rinnen- oder Nutprofile verlaufen auch unter einem Winkel von 45° zu den jeweiligen Tangenten.
– Eventuell auftretender Abrieb wird auf dem kürzesten Wege aus dem Bereich der Lagerflächen in die Rinnen- oder Nutprofile abtransportiert.

Die geometrische Symmetrie der Gleitschuhe erlaubt es darüber hinaus, daß die Axialdruck-Gleitlager bzw. Axialtrag-Gleitlager unabhängig von einer bevorzugten Drehrichtung eingesetzt werden können.

Erfindungsgemäße Axialdruck-Gleitlager bzw. Axialtrag-Gleitlager sind wartungsarm, haben eine lange Standzeit, besitzen auch bei Schmierstoffmangel gute Notlaufeigenschaften und können schließlich auch ungeschmiert unter gleichen Betriebsbedingungen benutzt werden, ohne daß nennenswerter Abrieb auftritt. Auch die durch DE-A 487 677 und DE-A 971 722 bekanntgewordenen Axialdruck-Gleitlager bzw. Axialtrag-Gleitlager erreichen nicht die vorteilhaften Betriebsbedingungen der erfindungsgemäßen Axialdruck-Gleitlager bzw. Axialtrag-Gleitlager, weil bei ihnen die Gleitschuhe durch Rinnen- oder Nutprofile gegeneinander abgegrenzt sind, welche eine radial Ausrichtung haben, so daß sich an den Gleitschuhen jeweils trapezförmig begrenzte Laufflächenbereiche von relativ großer Flächenabmessung ergeben.

In weiterer Ausgestaltung der Erfindung können nach Anspruch 3 die Gleitschuhe einzeln in den Grundkörper eingesetzt sein und dessen Oberfläche überragen, wobei die Kantenflächen der einander benachbarten Gleitschuhe zwischen sich und der Seitenfläche des Grundkörpers die Rinnen- oder Nutprofile begrenzen.

Nach Anspruch 4 ist vorgesehen, daß die Gleitschuhe mit dem Grundkörper im Formgußverfahren verbunden sind.

Gemäß Anspruch 5 können die Gleitschuhe aber auch einstückig mit dem Grundkörper ausgeführt sein, wobei die Rinnen- oder Nutprofile durch Gießen (Formguß) oder durch Einschneiden, z.B. Einfräsen, gebildet sind.

Ein wichtiges Ausbildungsmerkmal für die erfindungsgemäßen Axialdruck-Gleitlager bzw. Axialtrag-Gleitlager besteht schließlich nach Anspruch 6 auch noch darin, daß die Öffnungsbreite des Rinnen- oder Nutprofils am Grundkörper bzw. zwischen den Gleitschuhen in Richtung von innen nach außen proportional der Kantenlänge der jeweils benachbarten Gleitschuhe ist.

Auch durch diese Merkmale unterscheidet sich das erfindungsgemäße Axialdruck-Gleitlager bzw. Axialtrag-Gleitlager in vorteilhafter Weise von denjenigen nach DE-A 487 677 und nach DE-A 971 722, weil demgegenüber eine optimale Schmierstoffversorgung der Laufflächen wie auch der ungehinderte und problemlose Abtransport des Abriebs aus dem wirksamen Lagerbereich herbeigeführt wird.

Anhand der Zeichnung wird der Gegenstand der Erfindung nachfolgend ausführlich erläutert. Dabei zeigen

Figur 1 eine Draufsicht auf einen Ausschnittbereich des mit Gleitschuhen bestückten Grundkörpers eines ringförmigen Axialdruck- bzw. -traglagers,

Figur 2 einen Schnitt entlang der Linie II–II in Fig. 1, wobei dem mit den Gleitschuhen bestückten Grundkörper eine hochfeste Tragscheibe mit ebener Gegenlagerfläche zugeordnet ist.

Das in der Zeichnung dargestellte Axialdruck- bzw. -traglager 1 ist insbesondere für den Einsatz bei langsam drehenden Maschinen geeignet und vorzugsweise zur Benutzung in Verbindung mit Regenerativ-Wärmeaustauschern vorgesehen, die entweder mit relativ zu ortsfesten Wärmespeichermassen drehbeweglichen Gaszuführungs- und/oder Gasabführungshauben ausgestattet sind, oder aber die relativ drehbar zu ortsfesten Gaszuführungs- und/oder Gasabführungshauben angeordnete Wärmespeichermassen aufweisen.

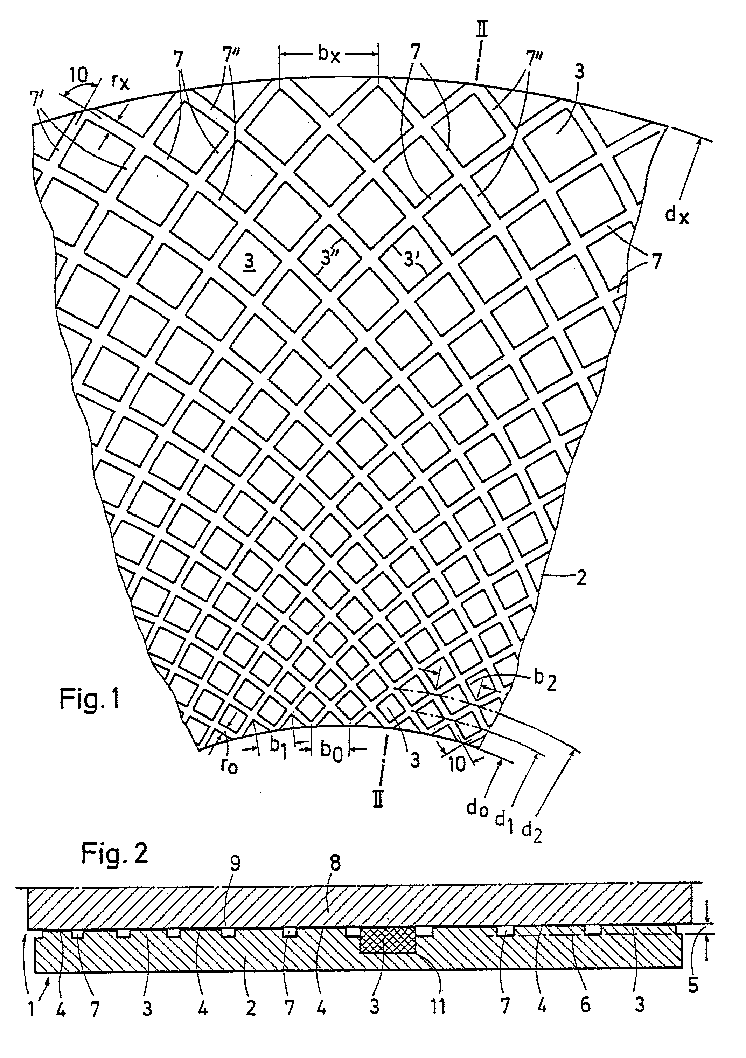

Das Axialdruck- bzw. -traglager 1 weist dabei einen mit dem einen Maschinenteil verbundenen Grundkörper 2 auf, der mit einer Vielzahl von Gleitschuhen 3 ausgestattet ist, von denen jeder eine ebene Lauffläche 4 hat. Die Laufflächen 4 dieser Gleitschuhe 3 liegen dabei mit einem Abstand 5 oberhalb der Hauptebene 6 des Grundkörpers 2, die in Fig. 2 durch eine strichpunktierte Linie angedeutet ist.

Zwischen den einander benachbarten Gleitschuhen 3 sind jeweils Rinnen- oder Nutprofile 7 freigehalten, deren Grundfläche auf Höhe der Hauptebene 6 des Grundkörpers liegt.

Mit den Laufflächen 4 sämtlicher Gleitschuhe 3 des Grundkörpers 2 wirkt eine mit dem anderen Maschinenteil verbundene, hochfeste Tragscheibe 8 über ihre Gegenlagerfläche 9 zusammen, wie das der Fig. 2 deutlich zu entnehmen ist.

Aus Fig. 1 der Zeichnung ist hingegen ersichtlich, daß sämtliche Gleitschuhe 3 am Grundkörper 2 eine einem Viereck wenigstens angenäherte Grundrißform haben und dabei auf vorgegebenen Teilkreisen $d_0$, $d_1$, $d_2$ .... $d_x$ liegend zueinander kongruent ausgebildet sind.

Erkennbar ist aus Fig. 1 aber auch, daß die Größenabmessung der Laufflächen dieser Gleitschuhe 3 in Richtung vom Innenumfang (Teilkreis $d_0$) zum Außenumfang (Teilkreis $d_x$) des Grundkörpers 2 mit größer werdendem Teilkreisdurchmesser zunimmt.

Die einzelnen Gleitschuhe 3 werden auf dem Grundkörper 2 durch zwei Gruppen 7' und 7" von Rinnen- oder Nutprofilen 7 begrenzt, die in sich gegenseitig schneidender Anordnung vorgesehen sind.

Die beiden Gruppen 7' und 7" von Rinnen- oder Nutprofilen 7 verlaufen dabei jeweils unter Winkeln 10 zueinander, die zwischen sich etwa rautenförmig umrissene Gleitschuhe 3 eingrenzen.

Die Rinnen- oder Nutprofile 7 sind so gestaltet, daß beide Gruppen 7' und 7" derselben einen spiralförmig gekrümmten Verlauf haben und dabei ihre Krümmungsrichtung zueinander gegensinnig vorgesehen ist. Eine optimale Auslegung des Axialdruck- bzw. -traglagers 1 wird dabei dann erreicht, wenn die Rinnen- oder Nutprofile 7 beider Gruppen 7' und 7" jeweils die Form einer logarithmischen Spirale haben, wie dies in Fig. 1 der Zeichnung dargestellt ist.

Bei einem derartigen Verlauf der Rinnen- oder Nutprofile ergeben sich in Abhängigkeit vom jeweiligen Lagerdurchmesser $d_0$, $d_1$, $d_2$ ....$d_x$ und von der Anzahl der vorgesehenen Rinnen- oder Nutprofile 7 rautenförmig begrenzte Gleitschuhe 3 verschiedener Größe, die geometrisch ähnlich sind und sich jeweils einem bestimmten Teilkreisdurchmesser zuordnen lassen.

Die Anzahl der auf jeden Teilkreis $d_0$, $d_1$, $d_2$ .... $d_x$ vorgesehenen Gleitschuhe 3 ist dabei über den Gesamtumfang des Grundkörpers hinweg überall gleich. Die Diagonalen bzw. Kreuzungspunkte der die Gleitschuhe 3 begrenzenden Rinnen- oder Nutprofile 7 beider Gruppen 7' und 7" liegen jeweils auf den einzelnen Teilkreisen und haben Abstände $b_0$, $b_1$, $b_2$ .... $b_x$ voneinander, die dem jeweiligen Teilkreisdurchmesser $d_0$, $d_1$, $d_2$ .... $d_x$ proportional sind.

Die Begrenzungslinien 3 und 3" der einzelnen Gleitschuhe 3 stehen unter einem Winkel von 45° zu den jeweiligen Teilkreisen $d_0$, $d_1$, $d_2$ .... $d_x$ und haben an den betrachteten Stellen zugleich auch einen dem jeweiligen Teilkreisradius entsprechenden Krümmungsradius. Auch zu den Tangenten an den jeweiligen Teilkreis $d_0$, $d_1$, $d_2$ .... $d_x$ nehmen die Begrenzungslinien 3 und 3" der einzelnen Gleitschuhe 3 jeweils einen Winkel von 45° ein.

Die Abstände $b_0$, $b_1$, $b_2$ .... $b_x$ zwischen den Kreuzungspunkten bzw. Diagonalen beider Gruppen 7 und 7" von Rinnen- oder Nutprofilen 7 beruhen auf folgenden Beziehungen:

$$b_1 = (d_0 + b_0).$$
$$b_2 = (d_0 + b_0 + b_1).$$
$$b_x = (d_0 + b_0 + b_1 + b_2 .... + b_x - 1).$$

Der einer logarithmischen Spirale entsprechende Verlauf der Rinne- oder Nutprofile 7 beider Gruppen 7 und 7" stellt sicher, daß bei der Relativbewegung der Laufflächen 4 an den Gleitschuhen 3 des Grundkörpers 2 zu den Gegenlagerflächen 9 der Tragscheibe 8 eine regelmäßige Schmierstoffversorgung gewährleistet ist, und zwar unabhängig von der jeweiligen Drehrichtung. Gleichzeitig wird dafür gesorgt, daß gegebenenfalls anfallender Abrieb aus dem Bereich der Lagerflächen 4 und der Gegenlagerflächen 9 auf kürzestem Wege in den Bereich der Rinnen- oder Nutprofile 7 gelangt und von dort aus abtransportiert wird.

Dem optimalen Schmierstofftransport ist es auch dienlich, daß die Öffnungsbreite des Rinnen- oder Nutprofils 7 am Grundkörper 2 bzw. zwischen den einander benachbarten Gleitschuhen 3 in Richtung vom Innendurchmesser $d_0$ zum Außendurchmesser $d_x$ proportional der Flächengröße der jeweils benachbarten Gleitschuhe 3 zunimmt, so daß die kleinste Breite $r_0$ des Rinnen- oder Nutprofils 7 dem Innenumfang des Grundkörpers 2 zugeordnet ist, während die größte Öffnungsbreite $r_x$ im Bereich des Außenumfangs desselben liegt.

Auch für den Abtransport des sich in den Rinnen- oder Nutprofilen 7 ansammelnden Abriebs ist es wichtig, daß sich die Rinnen- oder Nutprofile 7 vom Innenumfang zum Außenumfang des Grundkörpers 2 hin stetig verbreitern.

Es liegt auf der Hand, daß durch die völlig gleichmäßige Verteilung der Gleitschuhe 3 über den gesamten Flächenbereich des Grundkörpers 2 optimale Lagereigenschaften herbeigeführt werden, die auch im Arbeitsbereich der sogenannten Mischreibung bei geringer Flächenbelastung mit geringstmöglichem Abrieb arbeiten, also lange Standzeiten aufweisen sowie selbst bei Schmierstoffmangel noch gute Laufeigenschaften besitzen. Die Axialdruck-bzw. -traglager 1 können einen einzigen ring- oder kreisförmigen Grundkörper aufweisen. Sie können aber auch durch Aneinanderreihung von untereinander gleichen Ring- bzw. Kreissektoren gebildet werden.

Aus Fig. 2 ist ersichtlich, daß die Gleitschuhe 3 als Einzelelemente hergestellt werden können und sich dann in am Grundkörper 2 ausgebildete Vertiefungen 11 einsetzen lassen. In diesem Fall ist es auch möglich, die Gleitschuhe 3 mit dem Grundkörper 2 in einem Formgußverfahren zu verbinden.

Die Gleitschuhe 3 können aber, wie ebenfalls der Fig. 2 zu entnehmen ist, auch einstückig mit dem Grundkörper 2 ausgeführt werden, wobei sie vorzugsweise dadurch gebildet sind, daß die Rinnen- oder Nutprofile 7 in die Oberfläche 4 des Grundkörpers 2 eingegossen oder bis auf die Tiefe der Hauptebene 6 eingeschnitten, z.B. eingefräst werden.

## Patentansprüche

1. Axialdruck-Gleitlager bzw. Axialtrag-Gleitlager (1), insbesondere für langsam drehende Maschinen, bei welchem ein Grundkörper (2), z.B. ein Ring oder ein Ringsektor, in Umlaufrichtung sowie Radialrichtung gleichmäßig verteilt angeordnete Gleitschuhe (3) trägt, auf denen sich eine ebene Gegenlagerfläche (9) abstützt, wobei einander benachbarte Gleitschuhe (3) jeweils durch Rinnen- oder Nutprofile (7; 7', 7") gegeneinander abgegrenzt sind, die einen spiralförmig gekrümmten Verlauf haben, dadurch gekennzeichnet, daß die Gleitschuhe (3) eine einem Viereck wenigstens angenäherte, rautenförmige Grundrißform haben und jeweils auf einer Vielzahl von sich in Umlaufrichtung um das Zentrum des Grundkörpers (2) erstreckenden Kreislinien ($d_0$, $d_1$, $d_2$ ..... $d_x$) gleichmäßig verteilt angeordnet und zueinander kongruent ausgebildet sind, daß die Kantenlänge der auf verschiedenen Kreislinien ($d_0$, $d_1$, $d_2$ ..... $d_x$) liegenden Gleitschuhe (3) proportional den unterschiedlichen Durchmessern dieser Kreislinien ($d_0$, $d_1$, $d_2$ ..... $d_x$) zunimmt, und daß zwei sich gegenseitig schneidende Gruppen (7' und 7") von Rinnen- oder Nutprofilen (7) die Gleitschuhe (3) gegeneinander abgrenzen und dabei mit zueinander gegensinniger Krümmungsrichtung vorgesehen sind.

2. Axialdruck-Gleitlager bzw. Axialtrag-Gleitlager nach Anspruch 1, dadurch gekennzeichnet, daß die Rinnen- oder Nutprofile (7) beider Gruppen (7' und 7") die Form einer logarithmischen Spirale mit übereinstimmenden jedoch zueinander spiegelbildlich angeordneten Spiralarmen haben.

3. Axialdruck-Gleitlager bzw. Axialtrag-Gleitlager nach Anspruch 1 oder 2, dadurch gekennzeichnet, daß die Gleitschuhe (3) einzeln in den Grundkörper (2) eingesetzt sind und dessen Oberfläche (6) um ein bestimmtes Maß (5) überragen, wobei die Kantenflächen (3' und 3") der einander benachbarten Gleitschuhe (3) zwischen sich und der Seitenfläche (6) des Grundkörpers (2) die Rinnen- oder Nutprofile (7; 7', 7") begrenzen.

4. Axialdruck-Gleitlager bzw. Axialtrag-Gleitlager nach einem der Ansprüche 1 bis 3, dadurch gekennzeichnet, daß die Gleitschuhe (3) mit dem Grundkörper (2) im Formgußverfahren verbunden sind (11).

5. Axialdruck-Gleitlager bzw. Axialtrag-Gleitlager nach einem der Ansprüche 1 bis 4, dadurch gekennzeichnet, daß die Gleitschuhe (3) einstückig mit dem Grundkörper (2) ausgeführt sind, wobei die Rinnen- oder Nutprofile (7; 7', 7") durch Gießen (Formguß) oder durch Einschneiden, z.B. Einfräsen, gebildet sind (Fig. 2).

6. Axialdruck-Gleitlager bzw. Axialtrag-Gleitlager nach einem der Ansprüche 1 bis 5, dadurch gekennzeichnet, daß die Öffnungsbreite (r₀ bis $r_x$) des Rinnen- oder Nutprofils (7; 7', 7") am Grundkörper (2) bzw. zwischen den Gleitschuhen (3) in Richtung von innen nach außen proportional der Kantenlänge der jeweils benachbarten Gleitschuhe (3) ist.

## Claims

1. Axial thrust friction bearing or axial journal friction bearing (1), more especially for slowly rotating machines, with which bearing a base member (2), for example, a ring or a ring sector, carries friction shoes (3) arranged uniformly distributed in the circumferential direction and also radially, on which shoes is supported a planar counter-bearing surface (9), in which friction shoes (3) adjoining one another are in each case defined relatively to one another by channel or groove profiles (7, 7', 7") having a helically curved path, characterised in that the friction shoes (3) have a diamond-shaped planar form at least approximating to a square and are formed congruently of one another and are arranged uniformly distributed on a plurality of circular lines ($d_0$, $d_1$, $d_2$,..... $d_x$) extending in the circumferential direction about the centre of the base member (2), that the edge length of the friction shoes (3) lying on different circular lines ($d_0$, $d_1$, $d_2$,....$d_x$) increases proportionally to the different diameters of these circular lines ($d_0$, $d_1$, $d_2$ ....$d_x$), and that two mutually intersecting groups (7' and 7") of channel or groove profiles (7) demarcate the friction shoes (3) from one another and are provided with a direction of curvature opposite to one another.

2. Axial thrust friction bearing or axial journal friction bearing according to claim 1, characterised in that the channel or groove profiles (7) of both groups (7' and 7") have the form of a logarithmic spiral with spiral arms which correspond but are arranged reversed to one another.

3. Axial thrust friction bearing or axial journal friction bearing according to claims 1 and 2, characterised in that the friction shoes (3) are inserted separately into the base member (2) and project by a certain amount (5) beyond the surface (6) thereof, the edge surfaces (3' and 3") of the friction shoes (3) adjoining one another limiting the channel or groove profiles (7; 7', 7") between them and the side surface (6) of the base member (2).

4. Axial thrust friction bearing or axial journal friction bearing according to one of claims 1 to 3, characterised in that the friction shoes (3) are connected at (11) to the base member (2) by a mould casting method.

5. Axial thrust friction bearing or axial journal friction bearing according to one of the claims 1 to 4, characterised in that the friction shoes (3) are made in one piece with the base member (2), the channel or groove profiles (7; 7', 7") being formed by casting (mould casting) or by cutting, e.g. milling (Fig. 2).

6. Axial thrust friction bearing or axial journal friction bearing according to claims 1 to 5, characterised in that the opening width (r₀ to $r_x$) of the channel or groove profile (7; 7', 7") on the base member (2) or between the friction shoes (3), in the outward direction, is proportional to the edge length of the respective adjacent friction shoe (3).

## Revendications

1. Palier à glissement à pression axiale ou à support axial (1), notamment destiné à des machines tournant lentement, dans lequel un élément de base (2), par exemple de forme annulaire ou en forme de secteur annulaire, comporte des sabots de glissement (3) uniformément distribués dans le sens périphérique ainsi que dans le sens radial, sabots de glissement sur lesquels s'appuie une surface d'appui plane (9), des sabots de glissement (3) adjacents étant chaque fois séparés l'un de l'autre par des gorges ou rainures (7, 7', 7") qui suivent un parcours courbé à la manière d'une spirale, caractérisé en ce que les sabots de glissement (3) présentent, vus en plan, une forme de losange au moins approximativement carrée et sont agencés de manière uniformément répartie sur une pluralité de lignes circonférentielles ($d_0$, $d_1$, $d_2$ ... $d_x$) s'étendent selon la direction circonférentielle autour du centre de l'élément de base (2) et sont congruents l'un par rapport à l'autre, en ce que la longueur des côtés des sabots de glissement (3) disposés sur différentes lignes circonférentielles ($d_0$, $d_1$, $d_2$ ... $d_x$) s'accroît proportionnellement aux différents diamètres de ces lignes circonférentielles ($d_0$, $d_1$, $d_2$ ... $d_x$), et en ce que deux groupes (7' et 7") de rainures ou gorges (7) qui se coupent mutuellement séparent les sabots de glissement (3) l'un par rapport à l'autre et sont prévus avec des directions de courbure opposées l'une à l'autre.

2. Palier à glissement à pression axiale ou à support axial selon la revendication 1 caractérisé en ce que les rainures ou gorges (7) des deux groupes (7' et 7") présentent la forme d'une spirale logarithmique comportant des bras de spirale coïncidents mais agencés symétriquement l'un par rapport à l'autre.

3. Palier à glissement à pression axiale ou à support axial selon la revendication 1 ou 2 caractérisé en ce que les sabots de glissement (3) sont montés individuellement dans l'élément de base (2) et font saillie d'une mesure déterminée (5) sur la surface (6) de celui-ci, les faces latérales (3' et 3") des sabots (3) adjacents déterminant entre elles et avec la face latérale (6) de l'élément de base (2) les rainures ou gorges (7, 7', 7").

4. Palier à glissement à pression axiale ou à support axial selon l'une quelconque des revendications 1 à 3 caractérisé en ce que les sabots de glissement (3) sont reliés (11) à l'élément de base (2) par le procédé de moulage.

5. Palier à glissement à pression axiale ou à support axial selon l'une quelconque des revendications 1 à 4 caractérisé en ce que les sabots de glissement (3) sont exécuté d'une seule pièce avec l'élément de base (2), les rainures ou gorges (7, 7', 7") étant formées par moulage ou par entaillage, par exemple par fraisage (Fig. 2).

6. Palier à glissement à pression axiale ou à support axial selon l'une quelconque des revendications 1 à 5 caractérisé en ce que la largeur d'ouverture ($r_0$ à $r_x$) des rainures ou gorges (7, 7', 7") de l'élément de base (2') ou comprises entre les sabots de glissement (3) est proportionnelle à la longueur des côtés des sabots de de glissement (3) adjacents, dans le sens partant du centre vers l'extérieur.

Fig.1

Fig. 2